# EUROPEAN PATENT APPLICATION

(11) **EP 4 773 677 A1**
(43) Date of publication of application: **08.07.2026**
(21) Application number: 24919779.9
(22) Date of filing: 08.10.2024
(51) Int. Cl.: H04W 48/18

(54) **MULTIFUNCTIONAL SIM CARD, ALLOCATION METHOD THEREFOR, CARD ALLOCATION SYSTEM AND ELECTRONIC DEVICE**

(30) Priority: 26.01.2024 CN 202410112354
(71) Applicant: Shenzhen Ucloudlink Technology Limited, Shenzhen, Guangdong 518000 (CN)
(72) Inventor: LIU, Zhenhui, Shenzhen, Guangdong 518000 (CN); GONG, Zhihui, Shenzhen, Guangdong 518000 (CN); LIU, Zhenli, Shenzhen, Guangdong 518000 (CN)
(74) Representative: Bayramoglu et al.
(86) International application number: PCT/CN2024/123416
(87) International publication number: WO 2025/156699

(57) **Abstract**

This application is applicable to the field of network communication technologies, and provides a multi-function SIM card and an allocation method therefor, a card allocation system, and an electronic device. The allocation method for the multi-function SIM card includes: receiving a card allocation request sent by user equipment; determining a target type from a plurality of SIM card types based on an identity and first location information that are carried in the card allocation request; and sending first response information to the user equipment, where the first response information includes first type information of the target type and a SIM card code number of the target type, and the first type information is used to enable the multi-function SIM card to enter a target working mode corresponding to the target type, so that the user equipment camps on a network based on the SIM card code number and a communication channel corresponding to the target working mode. Embodiments of this application can improve scenario adaptability of a SIM card, improve a service capability of a SIM card service provider, and optimize operation costs.

## Description

This application claims priority to Chinese Patent Application No. 202410112354.9, filed on January 26, 2024 to China National Intellectual Property Administration, entitled "Multi-functional SIM Card and Allocation Method Therefor, Card Allocation System, and Electronic Device", the entire contents of which are incorporated herein by reference.

### TECHNICAL FIELD

This application pertains to the field of network communication technologies, and in particular, relates to a multi-function SIM card and an allocation method therefor, a card allocation system, and an electronic device.

### BACKGROUND

Currently, there are several types of SIM cards in the market that support remote downloading of SIM card information, such as an OTA SIM card that supports the downloading of SIM information through an SMS message channel, an eSIM card that supports standard GSMA specifications, and a Bluetooth SIM card that supports wireless Bluetooth reading and writing. These cards bring specific convenience to business travelers who need to cross regions. However, operators provide different types of technologies, and have a specific requirement on user equipment, which causes a selection difficulty for a user. Some operators deploy various types of SIM cards, such as a physical SIM card, a soft SIM card, and an eSIM card, on a cloud server. How to provide proper SIM resources for the user to enable the user to access a local network by using different types of SIM cards anytime and anywhere, and provide convenient and favorable network experience for the user is an urgent problem to be solved.

### TECHNICAL PROBLEM

Embodiments of this application provide a multi-function SIM card and an allocation method therefor, a card allocation system, and an electronic device, to improve scenario adaptability of a SIM card, improve a service capability of a SIM card service provider, and optimize operation costs.

### TECHNICAL SOLUTION

A first aspect of the embodiments of this application provides an allocation method for a multi-function SIM card, applied to user equipment, where the multi-function SIM card is configured in the user equipment, and the multi-function SIM card is configured with a plurality of working modes that are in a one-to-one correspondence with a plurality of SIM card types. The allocation method for a multi-function SIM card includes: sending a card allocation request to a server when a working mode of the multi-function SIM card is an initial working mode, where the card allocation request carries an identity and first location information of the multi-function SIM card, and the initial working mode is an STK SIM card mode; obtaining first response information fed back by the server based on the identity and the first location information, and controlling, based on the first response information, the multi-function SIM card to enter a corresponding working mode and camp on a network; and in a network camping process, switching the multi-function SIM card to the initial working mode if the multi-function SIM card meets a switching condition.

A second aspect of the embodiments of this application provides an allocation method for a multi-function SIM card, applied to a server, where the allocation method for a multi-function SIM card includes: receiving a card allocation request sent by user equipment, where the card allocation request carries an identity and first location information of a multi-function SIM card configured in the user equipment, and the multi-function SIM card is configured with a plurality of working modes that are in a one-to-one correspondence with a plurality of SIM card types; determining a target type from the plurality of SIM card types based on the identity and the first location information; and sending first response information to the user equipment, where the first response information includes first type information of the target type and a SIM card code number of the target type, and the first type information is used to enable the multi-function SIM card to enter a target working mode that is in the plurality of working modes and that corresponds to the target type, so that the user equipment completes writing of the SIM card code number based on a communication channel corresponding to the target working mode and camps on a network.

A third aspect of the embodiments of this application provides an allocation apparatus for a multi-function SIM card, configured on user equipment, where the multi-function SIM card is configured in the user equipment, and the multi-function SIM card is configured with a plurality of working modes that are in a one-to-one correspondence with a plurality of SIM card types. The allocation apparatus for a multi-function SIM card includes: a request unit, configured to send a card allocation request to a server when a working mode of the multi-function SIM card is an initial working mode, where the card allocation request carries an identity and first location information of the multi-function SIM card, and the initial working mode is an STK SIM card mode; a camping unit, configured to obtain first response information fed back by the server based on the identity and the first location information; and control, based on the first response information, the multi-function SIM card to enter a corresponding working mode and camp on a network; and a switching unit, configured to: in a network camping process, switch the multi-function SIM card to the initial working mode if the multi-function SIM card meets a switching condition.

A fourth aspect of the embodiments of this application provides an allocation apparatus for a multi-function SIM card, configured on a server, where the allocation apparatus for a multi-function SIM card includes: a receiving unit, configured to receive a card allocation request sent by user equipment, where the card allocation request carries an identity and first location information of a multi-function SIM card configured in the user equipment, and the multi-function SIM card is configured with a plurality of working modes that are in a one-to-one correspondence with a plurality of SIM card types; a determining unit, configured to determine a target type from the plurality of SIM card types based on the identity and the first location information; and an allocation unit, configured to send first response information to the user equipment, where the first response information includes first type information of the target type and a SIM card code number of the target type, and the first type information is used to enable the multi-function SIM card to enter a target working mode that is in the plurality of working modes and that corresponds to the target type, so that the user equipment completes writing of the SIM card code number based on a communication channel corresponding to the target working mode and camps on a network.

A fifth aspect of the embodiments of this application provides a card allocation system, including a server and user equipment, where a multi-function SIM card is configured in the user equipment, and the multi-function SIM card is configured with a plurality of working modes that are in a one-to-one correspondence with a plurality of SIM card types; the user equipment is configured to perform the steps of the allocation method for a multi-function SIM card according to the first aspect; and the server is configured to perform the steps of the allocation method for a multi-function SIM card according to the second aspect.

A seventh aspect of the embodiments of this application provides an electronic device, including a storage, a processor, and a computer program that is stored in the storage and that is capable of running on the processor. The steps of the allocation method for a multi-function SIM card according to the first aspect or the second aspect are implemented when the processor executes the computer program.

An eighth aspect of the embodiments of this application provides a multi-function SIM card, and the multi-function SIM card is configured with a plurality of working modes that are in a one-to-one correspondence with a plurality of SIM card types. When the multi-function SIM card is configured in user equipment, the multi-function SIM card is configured to enable the user equipment to camp on a network based on the steps of the allocation method for a multi-function SIM card according to the first aspect.

A ninth aspect of the embodiments of this application provides a computer-readable storage medium, where the computer-readable storage medium stores a computer program. The steps of the allocation method for a multi-function SIM card according to the first aspect or the second aspect are implemented when the computer program is executed by a processor.

A tenth aspect of the embodiments of this application provides a computer program product. When the computer program product runs on an electronic device, the electronic device is enabled to perform the steps of the allocation method for a multi-function SIM card according to the first aspect or the second aspect.

### BENEFICIAL EFFECTS

In the implementations of this application, the card allocation request is sent to the server when the working mode of the multi-function SIM card is the initial working mode, the first response information fed back by the server based on the identity and the first location information is obtained, and the multi-function SIM card is controlled, based on the first response information, to enter the corresponding working mode and camp on the network. In this way, a SIM card may be controlled, based on a use scenario of the SIM card, to enter working modes corresponding to code numbers of different SIM card types (for example, a physical SIM card, an eSIM card, and a soft SIM card). In addition, in the network camping process, the multi-function SIM card is switched to the initial working mode if the multi-function SIM card meets the switching condition, so that use of different types of SIM cards can be implemented by a single SIM card, which improves scenario adaptability of the SIM card, improves a service capability of a SIM card service provider, and optimizes operation costs.

### BRIEF DESCRIPTION OF THE DRAWINGS

To describe the technical solutions in the embodiments of this application more clearly, the following briefly describes the accompanying drawings required for describing the embodiments or the conventional technology. Apparently, the accompanying drawings in the following description show merely some embodiments of this application, and a person of ordinary skill in the art may still derive other drawings from these accompanying drawings without creative efforts.
FIG. 1 is a schematic diagram of a structure of a card allocation system according to an embodiment of this application;
FIG. 2 is a schematic diagram of functional modules of an application according to an embodiment of this application;
FIG. 3 is a schematic diagram of a specific structure of a card allocation system according to an embodiment of this application;
FIG. 4 is a schematic flowchart of a first implementation of an allocation method for a multi-function SIM card according to an embodiment of this application;
FIG. 5 is a schematic flowchart of a second implementation of an allocation method for a multi-function SIM card according to an embodiment of this application;
FIG. 6 is a schematic flowchart of a specific implementation of network camping of user equipment according to an embodiment of this application;
FIG. 7 is a schematic flowchart of a specific implementation of switching a working mode of a SIM card by user equipment according to an embodiment of this application;
FIG. 8 is a schematic diagram of a first structure of an allocation apparatus for a multi-function SIM card according to an embodiment of this application;
FIG. 9 is a schematic diagram of a second structure of an allocation apparatus for a multi-function SIM card according to an embodiment of this application; and
FIG. 10 is a schematic diagram of a structure of an electronic device according to an embodiment of this application.

### EMBODIMENTS OF THE INVENTION

To make the objectives, technical solutions, and advantages of this application clearer, the following further describes this application in detail with reference to the accompanying drawings and embodiments. It should be understood that specific embodiments described herein are merely used to explain this application, but are not intended to limit this application. Based on the embodiments of this application, all other embodiments obtained by a person skilled in the art without creative efforts shall fall within the protection scope of this application.

Operators provide different types of technologies, and have a specific requirement on user equipment, which causes a selection difficulty for a user. In addition, some operators deploy various types of SIM cards, such as a physical SIM card, a soft SIM card, and an eSIM card, on a cloud server. How to provide proper SIM resources for the user to enable the user to access a local network by using different types of SIM cards anytime and anywhere, and provide convenient and favorable network experience for the user is an urgent problem to be solved. Based on this, this application provides a multi-function SIM card and an allocation method therefor, so that a use requirement of the user for a SIM card in different scenarios can be met.

To describe the technical solutions in this application, the following describes the technical solutions by using specific embodiments.

For ease of description, some nouns appearing in this application are first described.

SIM: Subscriber Identity Module, subscriber identity module.

OTA: Over-the-Air Technology, over-the-air technology.

eSIM: Embedded Universal Integrated Circuit Card, eUICC, embedded UICC universal integrated circuit card.

P-SIM: Physical SIM, physical SIM card.

GSMA: Global System for Mobile communications Association, global system for mobile communications association.

STK: SIM Tool Kit, SIM tool kit.

LPA: Local Profile Assistant, local profile assistant.

BIP: Bearer Independent Protocol, bearer independent protocol.

OMA: Open Mobile API, open mobile API.

SM-DP+: Subscription Manager Data Preparation+, subscription manager data preparation+.

BLE: Bluetooth Low Energy, Bluetooth low energy.

ICCID: Integrate Circuit Card Identity, integrate circuit card identity.

IMSI: International Mobile Subscriber Identity, international mobile subscriber identity.

MSISDN: mobile station international subscriber directory number.

Ki: data key.

POC: authentication key.

LTE: Long Term Evolution, long term evolution.

UTRAN: Universal Terrestrial Radio Access Network, third-generation mobile communication system.

GSM: Global System for Mobile Communications, global system for mobile communications.

GPRS: General Packet Radio Service, general packet radio service.

Profile: configuration data, that is, SIM card information.

PLMN: Public Land Mobile Network, public land mobile network.

LAC: Location Area Code, location area code.

Cell: base station number.

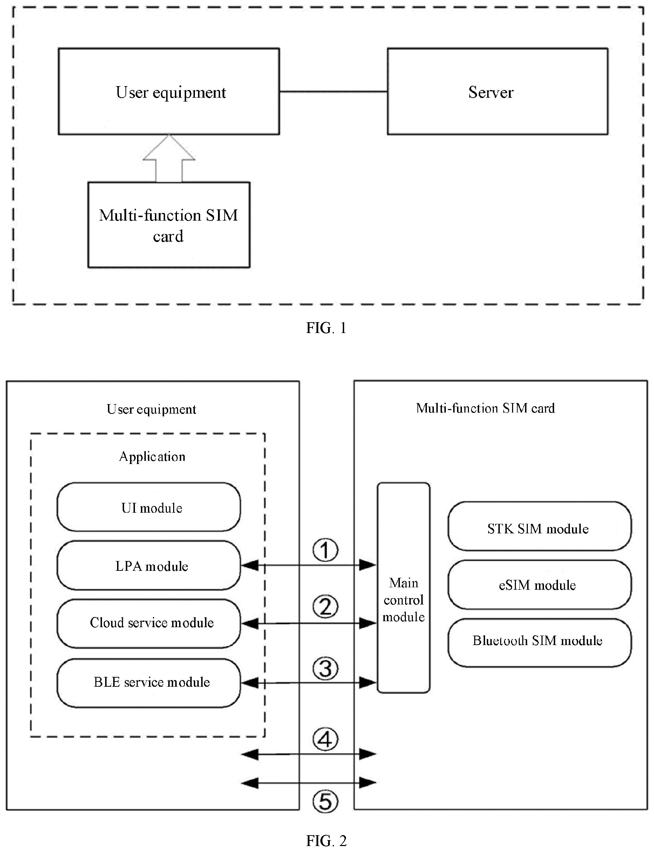

Referring to FIG. 1, FIG. 1 is a schematic diagram of an architecture of a multi-function SIM card and a card allocation system according to this application.

The card allocation system may include user equipment and a server. The user equipment may be a mobile device such as a mobile phone, a tablet computer, or a mobile router (MobileWIFI, MIFI). In an implementation of this application, the multi-function SIM card is configured in the user equipment. For example, the multi-function SIM card may be inserted into a SIM card slot of the user equipment, or may be embedded in the user equipment. This is not limited in this application.

In an implementation of this application, the multi-function SIM card configured in the user equipment may be configured with a plurality of working modes that are in a one-to-one correspondence with a plurality of SIM card types. Specifically, the multi-function SIM card may support at least three working modes which correspond to three different remote SIM download solutions. The at least three working modes include an eSIM card mode, an STK SIM card mode, and a Bluetooth SIM card mode.

An initial working mode of the multi-function SIM card is the STK SIM card mode. In this mode, a globally roaming SIM card code number (that is, a seed card) is preset in the multi-function SIM card, so that the user equipment can access a wireless network by using the seed card. The multi-function SIM card may interact with a server platform by using a network of the seed card. In this mode, the multi-function SIM card has a built-in STK application, and may interact with the user equipment by using a proactive command, to support the user equipment to obtain information (for example, code number information of the seed card (an ICCID and an IMSI) and location information (a PLMN, a LAC, a Cell, and the like)) about a currently accessed wireless network from the card by using an LPA module, and then request for card allocation. The STK application on the card may interact with the server platform through a wireless network of the seed card, for example, through an SMS message channel or a BIP channel (a BIP-based data channel), and when the server allocates a soft SIM card, can support remote card writing, remote operations, and the like of the platform.

The multi-function SIM card needs to be switched to the eSIM card mode when the server allocates an eSIM card. In this mode, the LPA module is first started by using an application in the user equipment, to establish a connection to an eSIM code number distribution platform (that is, an SM-DP+ platform) on the server, and eSIM profile data is requested for downloading. When the user equipment is an Android device, an application in the Android device selects, by using the LPA module, an OMA channel to write eSIM profile into the multi-function SIM card. The device may enable the eSIM profile to camp on a network (that is, the user equipment accesses the wireless network by using a SIM card, and the device may use a function such as data, voice, or an SMS message). When the user equipment is an IOS device, an application in the IOS device selects, by using the LPA, a Bluetooth channel to write eSIM profile into the multi-function SIM card. The device may enable the eSIM profile to camp on the network. If the application in the device has a system permission (may access the SIM card slot), the application in the device selects, by using the LPA module, a system channel to write the eSIM profile into the multi-function SIM card. The device may enable the eSIM profile to camp on the network.

The multi-function SIM card needs to be switched to a BLE SIM card mode when the server allocates a physical SIM card. The application in the user equipment enables a Bluetooth service to establish a connection to a Bluetooth module in the multi-function SIM card, and writes profile into the multi-function SIM card through the Bluetooth channel. The device may enable the profile to camp on the network.

When the application in the device detects that an order expires or the device has no network service, the application in the device performs local profile management based on a current SIM card mode, and switches the multi-function SIM card from the current mode to the STK SIM mode. For example, the application in the user equipment obtains order expiration information, and the multi-function SIM card is in the eSIM card mode currently. In this case, the LPA may be invoked to deliver an instruction to the SIM card through a channel supported by the device to delete the eSIM profile. After the profile is deleted successfully, the SIM card is automatically switched from the eSIM card mode to the STK SIM card mode. If the multi-function SIM card is in the BLE SIM card mode currently, a Bluetooth service module in the application of the user equipment does not send a heartbeat message to the Bluetooth module of the multi-function SIM card. When detecting that a heartbeat expires, the multi-function SIM card automatically deletes profile data. After successful deletion, the SIM card is automatically switched from the BLE SIM card mode to the STK SIM card mode.

In some implementations of this application, an application (Application, APP) that can use a SIM card may be installed on the user equipment. APPs may be classified into IOS applications and Android platform applications based on platform types, but functions of the applications of the platforms are the same.

For example, referring to FIG. 2, FIG. 2 is a schematic diagram of an application in user equipment and a multi-function SIM card inserted into the user equipment.

The application in the user equipment, in this application, is an application that is designed for the multi-function SIM card and that is provided for a user for use. Functional modules of the application may include a user interface design (User Interface Design, UI) module, an LPA module, a cloud service module, and a BLE service module.

The multi-function SIM card is a SIM card central to this application. A shape of the multi-function SIM card may be exactly the same as that of a SIM card of a common mobile terminal device, or may be adjusted based on an actual requirement. The multi-function SIM card may be inserted into a SIM card slot of the user equipment. Various cloud SIM card resources (for example, a physical SIM card, an eSIM card, and a soft SIM card) may be downloaded from a remote server through cooperation of the application and a server system, to implement automatic switching of functions and working modes of an STK SIM card, an eSIM card, and a BLE SIM card. FIG. 2 shows that the multi-function SIM card includes a main control module, an STK SIM card module, an eSIM module, and a Bluetooth module. The main control module implements interaction with the user equipment, and implements mode switching of three types of cards.

FIG. 2 shows that there are five types of communication channels between the user equipment and the multi-function SIM card, which are respectively marked as ①, ②, ③, ④, and ⑤.

An OMA channel ① means that an Android system provides an application with an invokable program interface that interacts with a SIM card. The application may complete interaction with the multi-function SIM card in a card slot of the user equipment by invoking this interface. This interaction manner between the user equipment and the multi-function SIM card is referred to as the OMA channel.

A system channel ② means that an Android or IOS system provides an application with a permission for direct reading/writing of the multi-function SIM card in the card slot, that is, provides a standard command set. The application completes interaction with the multi-function SIM card in the user equipment by sending a read/write command to hardware. This interaction manner between the user equipment and the multi-function SIM card is referred to as the system channel.

A Bluetooth channel ③ means that an Android or IOS system provides an application with an invokable program interface, so that the application invokes this interface to complete interaction with the multi-function SIM card (there is a Bluetooth software/hardware module on the multi-function SIM card) through a Bluetooth module of the user equipment. This interaction manner between the user equipment and the multi-function SIM card is referred to as the Bluetooth channel.

A BIP channel ④ or an SMS message channel ⑤ means that an Android or IOS system provides, when the multi-function SIM card is in an STK SIM card mode, an STK function after the user equipment accesses a network by using a seed card SIM built in the STK SIM card. The remote server may interact with the multi-function SIM card by using an operating system of the user equipment separately based on a data channel or an SMS message channel of the seed card. The manner in which the remote server interacts with the multi-function SIM card through the data channel is referred to as the BIP channel; and the manner in which the remote server interacts with the multi-function SIM card through the SMS message channel is referred to as the SMS message channel. Because the BIP channel and the SMS message channel enable the server to directly interact with the multi-function SIM card by using the operating system of the user equipment, the application of the user equipment cannot "perceive". Therefore, in this manner, the server only needs to synchronize information about a target working mode of the multi-function SIM card to the application of the user equipment.

The UI module of the application in the user equipment may provide a UI interaction interface to display a traffic mall and a card management interface, and implement functions such as package subscription or recharging, SIM card binding, and SIM card activation based on user operations.

The LPA module of the application in the user equipment provides a functional interface that is based on the standard eSIM protocol specifications. When the multi-function SIM card works in the eSIM mode, the application may connect to a standard SM-DP+ platform on the remote server by invoking the LPA interface, to complete downloading of profile data of the eSIM card from the SM-DP+ platform, and install the profile data on the multi-function SIM card. The LPA module may select different communication channels based on a type and a system permission of the operating system of the user equipment (the Android system selects the OMA channel, the IOS system selects the Bluetooth channel, and a device with the system permission may select a physical channel between the SIM card and the device), and write, through this communication channel, eSIM profile into the multi-function SIM card and perform management.

The cloud service (Cloud Service) module of the application in the user equipment is a module used by the application in the equipment to establish a secure connection channel with the server, and interact with the server. For example, the cloud service module requests a cloud card platform for card allocation, and downloads profile data of a SIM card code number.

The BLE service (BLE Service) module of the application in the user equipment requires a Bluetooth hardware module built in the user equipment, and supports the BLE4.0 and higher version. When the multi-function SIM card works in a BLE mode, after Bluetooth pairing information of the SIM card is obtained by querying the cloud card platform, the BLE service module may establish a Bluetooth connection to the SIM card by using a BLE service, transmit profile data, and maintain a long connection to the Bluetooth module of the multi-function SIM card by sending heartbeat data.

In an implementation of this application, based on the foregoing application, the user equipment may establish a connection to the server, and send a card allocation request to obtain a SIM card type and a SIM card code number that are allocated by the server, to control the SIM card to enter a corresponding working mode, complete writing of the SIM card code number into the multi-function SIM card based on a matched communication channel selected by the working mode, and enable the SIM card code number to camp on a network.

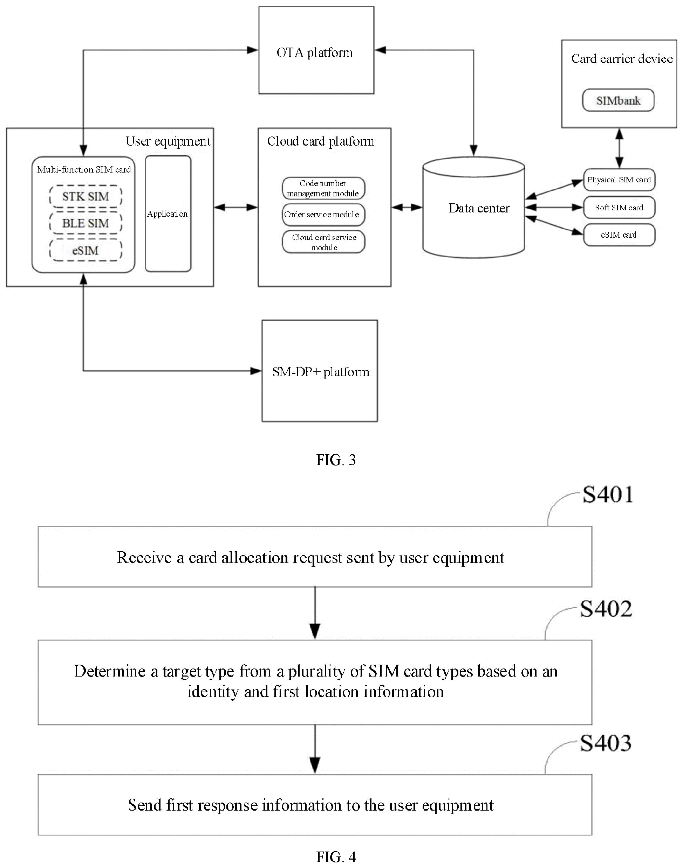

Specifically, the server may have a built-in cloud card platform. As shown in FIG. 3, the cloud card platform may include a code number management module, an order service module, and a cloud card service module.

The code number management module may maintain basic information of a multi-function SIM card. The basic information of the multi-function SIM card may include information about a seed card preset in the SIM card, Bluetooth pairing information, and information about cloud card code number resources.

The information about the seed card may include but is not limited to identities of the seed card, for example, an ICCID, an IMSI, and an MSISDN. The Bluetooth pairing information includes but is not limited to a Bluetooth name, a pairing key, and a Bluetooth data key. The cloud card code number resources may be classified into a soft SIM card, an eSIM card, and a physical SIM card based on SIM card types. Soft SIM card code number information may include an IMSI, a KI, and a POC. eSIM card code number information may include an activate code (Activate Code). P-SIM code number information may include an ICCID and an IMSI. The ICCID and the IMSI of the P-SIM may be automatically uploaded to the cloud card platform after being read from the card by a card carrier device.

The order service module may manage SIM card package orders that are from different user entry points (for example, a website and a third-party e-commerce platform), maintain information such as an order status, activation time, a validity period, expiration time, and a product service coverage.

The cloud card service module may receive a card allocation request, schedule and allocate a proper SIM card code number, and return response information. In addition, the cloud card service module may return Bluetooth pairing information of the SIM card when receiving a Bluetooth pairing information query instruction, and may return profile data when receiving a profile download request. In addition, the cloud card service module may maintain a TCP long connection to the user equipment, and forward an authentication request and an authentication response of a physical cloud card.

In some implementations of this application, referring to FIG. 3, a card allocation system may further include an OTA platform, a data center, a card carrier device, and an SM-DP+ platform.

The OTA platform may receive SIM card working mode notification information reported by the SIM card, and forward a SIM card working mode notification to the cloud card platform. In addition, the OTA platform further supports receiving a card writing result notification reported by an STK SIM card, and forwards the result notification to the cloud card platform. It should be noted that the OTA platform and the cloud card platform may be deployed on a same server or different servers. This is not limited in this application.

The data center is configured to maintain various types of information required by the card allocation system, such as the information about the seed card preset in the SIM card, the Bluetooth pairing information, the cloud SIM card code number type and information, the order status, and the order allocation information described above. The order status may specifically include an order number, an ICCID of a SIM card (seed card) bound to an order, an order activation status, activation time, expiration time, and a package. The order allocation information may specifically include the ICCID of the SIM card bound to the order, the order number, an order allocation code number (an ICCID and an IMSI of a SIM card code number), a code number type, SIM card code number allocation time, and SIM card code number reclaiming time. The package defines a serviceable coverage and time. For example, if a user subscribes to a 7-day package of "XX" for the multi-function SIM card, it indicates that a current serviceable coverage of the SIM card is "XX" and service time is 7 days (starting from activation time, for example, the activation start time begins after the user taps the UI to activate the SIM card successfully).

The card carrier device is a SIMBank device, may read information about a physical card in a card slot, report the information about the physical card to the data center, and may support remote authentication of the SIM card.

The SM-DP+ platform is an eSIM profile hosting platform of an operator, and supports an LPA service of an application in a device in downloading eSIM profile from the SM-DP+ platform by means of the activate code.

It may be understood that FIG. 1 and FIG. 3 are merely schematic diagrams of the card allocation system, and do not constitute a limitation on the card allocation system. In an implementation of this application, the card allocation system may further include more or fewer devices or components, for example, may further include a gateway, a bus, and the like. This is not limited in this application.

With reference to the card allocation system shown in FIG. 1 and FIG. 3 and the application shown in FIG. 2, FIG. 4 is a schematic flowchart of an implementation of an allocation method for a multi-function SIM card according to an embodiment of this application. The method may be applied to a server.

Specifically, the allocation method for a multi-function SIM card may include the following step S401 to step S403.

Step S401: Receive a card allocation request sent by user equipment.

In an implementation of this application, the user equipment may activate a SIM card by using a UI module after the SIM card is inserted at a destination, and send the card allocation request to a cloud card platform on the server, to obtain a SIM card code number. The card allocation request may carry an identity and first location information of the SIM card inserted into the user equipment. The identity may be used to identify the SIM card inserted into the user equipment, and may be an ICCID of a seed card preset in the foregoing multi-function SIM card. The first location information may be used to identify a location area in which the multi-function SIM card is currently located, and may be a PLMN, a LAC, and a Cell in which the seed card camps on a network currently.

Step S402: Determine a target type from a plurality of SIM card types based on an identity and first location information.

In an implementation of this application, the plurality of SIM card types include at least a physical SIM card, an eSIM card, and a soft SIM card. The server may determine, based on the identity and the first location information from the plurality of SIM card types supported by the multi-function SIM card, a target type that can be used by the SIM card inserted into the user equipment.

Step S403: Send first response information to the user equipment.

The first response information may include first type information of the target type and a SIM card code number of the target type. The first type information may be an indication of a working mode of the SIM card, and is used to indicate the multi-function SIM card inserted into the user equipment to enter a target working mode that is in a plurality of working modes and that corresponds to the target type, so that the user equipment completes writing of the SIM card code number based on a communication channel corresponding to the target working mode and camps on a network. Specifically, the multi-function SIM card inserted into the user equipment may support at least three different working modes: an STK SIM card mode, a BLE SIM card mode, and an eSIM card mode.

A seed card and an OTA platform address (ip: port list) are preset in the multi-function SIM card. In the STK SIM card mode, after the seed card is enabled and network camping succeeds, the SIM card may interact with the user equipment by using a proactive command (for example, a proactive UICC command), periodically obtain network camping information from the user equipment, and store the network camping information in the SIM card. When a user activates the SIM card by using the UI, an application in the user equipment may select, by using an LPA service, a matched channel to deliver an instruction to obtain current network camping information from the SIM card, and report the card allocation request. The SIM card actively reports a SIM card mode notification to an OTA platform based on the preset OTA platform address, and establishes a data channel (a data channel based on the BIP protocol) with the OTA platform. The network camping information includes but is not limited to a network type (for example, LTE, UTRAN, or GSM), a PLMN, a LAC, and a Cell. If the cloud card platform on the server allocates the soft SIM card, the application in the equipment does not need to perform processing. The OTA platform may encapsulate profile data of a soft SIM card code number into an STK data SMS message packet and send the STK data SMS message packet to a destination mobile subscriber number (that is, an MSISDN of the preset seed card) through a GPRS SMS message gateway. The card receives an OTA data SMS message for parsing and completes a card writing process. After card writing succeeds, the card reports a card writing result to the OTA platform through an SMS message channel. The OTA platform may alternatively send an encapsulated soft SIM card data packet to the SIM card through a BIP channel. After card writing completes, the OTA platform knows the card writing result.

The OTA platform forwards the card writing result to the cloud card platform. After receiving a card writing result notification, the cloud card platform updates an order activation status, activation time, and expiration time, and generates order allocation information.

In the BLE SIM card mode, the multi-function SIM card may support Bluetooth 4.0 and higher version. The user equipment establishes a Bluetooth connection to Bluetooth of the multi-function SIM card by using a built-in Bluetooth module, maintains a long connection by sending heartbeat data, and interacts with the card through a Bluetooth channel. The user equipment may send a SIM card Bluetooth pairing information query request to the cloud card platform by using the application, and start, based on returned SIM card Bluetooth pairing information, a BLE service module of the application to establish a Bluetooth connection to the SIM card. After Bluetooth connection succeeds, the user equipment may send an instruction through the Bluetooth channel, to notify the SIM card to switch to the BLE SIM card mode. In addition, a cloud service module of the application sends a SIM card code number profile download request to the cloud card platform. After receiving profile data of the SIM card code number returned by the cloud card platform, the profile data of the SIM card code number is sent to the SIM card through the Bluetooth channel.

Specifically, if a target type of the SIM card code number is the physical SIM card, the application may start a timing polling mechanism, query an authentication request received by the SIM card, forward the authentication request to the cloud card platform for remote authentication, and send a heartbeat packet to maintain a long connection to a TCP channel of the cloud card platform. If the target type of the SIM card code number is the soft SIM card, the application may disconnect data connection to the cloud card platform after the code number is downloaded.

In the eSIM card mode, the application in the user equipment may select a matched communication channel based on a device type and a system permission, and send an instruction to the multi-function SIM card by using the LPA module, to instruct and notify the SIM card to switch to the BLE SIM card mode. Then, the LPA downloads eSIM profile data from the SM-DP+ platform to the local device by using an eSIM activate code, and selects the matched communication channel based on the device type and the system permission to write the eSIM profile data into the multi-function SIM card.

Specifically, for user equipment with an IOS system, an application in the equipment starts the BLE service to establish a Bluetooth connection to the Bluetooth module of the multi-function SIM card, and sends a heartbeat to maintain a long connection. The application in the equipment starts the LPA to deliver an instruction through the Bluetooth channel, to instruct the SIM card to switch the working mode thereof to the eSIM card mode. The application in the equipment starts the LPA module, downloads the eSIM profile data from the SM-DP+ platform by using the eSIM activate code, and sends the eSIM profile data to the multi-function SIM card through the Bluetooth connection channel.

Specifically, for user equipment with an Android system, an application in the equipment starts the LPA module, selects an OMA channel, delivers an instruction to the card to notify the SIM card to switch the working mode thereof to the eSIM card mode, downloads profile data of the code number from the SM-DP+ platform, and sends the eSIM profile data to the multi-function SIM card through the OMA channel. Certainly, if the application in the user equipment with the Android system has a system permission, the LPA module may select a system channel between the SIM card and the user equipment to write the eSIM profile data into the multi-function SIM card through a physical channel between the SIM card and the equipment.

Correspondingly, if a determined target type is the physical SIM card, the multi-function SIM card inserted into the user equipment may enter the BLE SIM card mode, and a communication channel corresponding to the BLE SIM card mode is the Bluetooth channel. After downloading profile data of a physical SIM card code number from the cloud card platform, the user equipment may perform a card writing operation based on the Bluetooth channel, so that the user equipment camps on a network based on a SIM card code number of the physical SIM card. After card writing succeeds, the application in the user equipment reports a card writing result to the cloud card platform.

If the target type is the eSIM card, the SIM card inserted into the user equipment may enter the eSIM card mode, and a communication channel corresponding to the eSIM card mode is any one of an OMA channel, a Bluetooth channel, or a system channel. Similarly, the user equipment may successfully download the eSIM profile from the SM-DP+ platform, so that the user equipment writes the SIM card code number into the multi-function SIM card based on the Bluetooth channel, and uses the SIM card code number in the multi-function SIM card to camp on the network. After card writing succeeds, the user equipment receives an eSIM profile installation result reported by the card, and may report a card writing result to the cloud card platform through a network of the SIM card code number or the preset seed card.

If the target type is the soft SIM card, the SIM card inserted into the user equipment may enter the STK SIM card mode or the BLE SIM card mode, and a communication channel corresponding to the STK SIM card mode is an SMS message channel or a BIP channel. The OTA platform may send information about the soft card to the card through the SMS message channel and the BIP channel to perform a card writing operation, so that the user equipment can camp on the network based on a SIM card code number of the soft SIM card. After card writing succeeds, the card may report a card writing result.

In this way, the user equipment can write data of the SIM card code number into the multi-function SIM card based on the communication channel corresponding to the target working mode, and camp on the network.

In step S402, the server may query, based on the identity and the first location information, information about an order bound to the SIM card inserted into the user equipment, determine candidate types available for allocation from the plurality of SIM card types based on the information about the order, and then determine a target type from the candidate types.

The candidate types are SIM card code number types that may be used by the multi-function SIM card currently, and may be determined, for example, based on information about a package in an order subscribed by the user. The server may select any one of the candidate SIM card code number types available for allocation as the target type.

In some implementations, the server may determine traffic costs for the user equipment to use a SIM card code number of each candidate type to camp on the network, and may further determine the target type from the candidate types based on the traffic costs. The traffic costs are costs of purchasing a SIM card from an operator (for example, China Mobile or China Unicom) by a SIM card service provider (for example, a virtual operator).

For example, a candidate type with lowest traffic costs may be selected as the target type.

In some specific implementations, the server may first determine, based on the identity, whether a valid order is bound to the SIM card, and determine, based on the first location information, whether the first location information is within a service coverage of a product in the valid order. If the valid order exists and the first location information is within the service coverage, available SIM card types within the service coverage may be obtained as the candidate types, and then the target type is determined from the candidate types based on the traffic costs.

In some other implementations, the server may alternatively directly query, based on the first location information of the product in the order, a card allocation priority sequence corresponding to the first location information, to determine the target type from the candidate types based on the card allocation priority sequence.

The card allocation priority sequence may specifically refer to an allocation sequence of the physical SIM card, the eSIM card, and the soft SIM card. For different product service coverages, the card allocation priority sequence may be different. Further, the target type may be determined from the candidate types based on a service coverage of the first location information and a corresponding card allocation priority sequence.

After the target type is determined, the server may obtain a SIM card code number of the target type by using the cloud card platform, and in step S403, sends the first response information to the user equipment. Preferably, the SIM card code number of the target type may be a local SIM card code number associated with the first location information in SIM card code numbers of the target type. The local SIM card code number is a code number of a local SIM (Local SIM) card. Compared with a seed card, the user equipment camps on a network at a current location based on the local SIM card code number with lower costs and a better signal, which helps improve network camping experience.

After receiving the first response information, the application in the user equipment may control the SIM card to enter a target working mode corresponding to the target type, so that the user equipment writes data of the SIM card code number into the multi-function SIM card based on the communication channel corresponding to the target working mode, and camps on the network based on the written SIM card code number.

In an implementation of this application, when the multi-function SIM card meets a switching condition, the multi-function SIM card may further be switched to an initial working mode (STK SIM card mode).

In some implementations of this application, when delivered from a factory, the SIM card is set to the initial working mode. In other words, the SIM card is in the STK SIM card mode, and uses the seed card to camp on the network. Specifically, when the SIM card is powered on for the first time, the SIM card may enter the STK SIM card mode by default and use the seed card to camp on the network. When the SIM card is not the first time for powering on, the SIM card may directly enter a previous working mode, and camp on the network based on obtained profile data.

In some other implementations of this application, when the order bound to the multi-function SIM card inserted into the user equipment exceeds a validity period, the user equipment may determine that the multi-function SIM card inserted into the user equipment meets the switching condition. Further, when the multi-function SIM card inserted into the user equipment is out of a serviceable coverage and cannot provide a network, the user equipment may determine that the multi-function SIM card inserted into the user equipment meets the switching condition. The serviceable coverage is a service coverage of a SIM card code number currently used by the multi-function SIM card inserted into the user equipment. The SIM card code number cannot provide a network service when being out of the serviceable coverage.

More specifically, after allocation and writing of the SIM card code number are completed, if a current working mode of the multi-function SIM card is the STK SIM card mode, and if the order of the SIM card expires or a current location of the SIM card is not within the service coverage recorded in the SIM card code number, the SIM card may automatically delete profile data in the SIM card. In this case, the working mode of the SIM card may be automatically switched to an initial STK SIM card mode, the seed card is re-enabled to camp on the network, and a SIM card mode notification is actively reported to the OTA platform.

If the current working mode is the eSIM card mode, when the application in the equipment determines that the order of the SIM card exceeds the validity period or the SIM card is out of the serviceable coverage and cannot provide the network service normally, the application in the user equipment may start the LPA module to perform a local operation on eSIM profile data. When the order exceeds the validity period, the application in the user equipment may enable the LPA to deliver an instruction to the SIM card to instruct the SIM card to delete the eSIM profile data. When the network service cannot be provided normally, the application in the user equipment may start the LPA module to deliver an instruction to the SIM card to instruct the SIM card to disable the eSIM profile data. After deleting or disabling the eSIM profile data successfully, the SIM card automatically switches back to the initial STK SIM card mode, re-enables the seed card to camp on the network, and actively reports a notification to the OTA platform. The LPA module also notifies the SM-DP+ platform of a local operation result of the eSIM profile data.

If the current working mode of the multi-function SIM card is the BLE SIM mode, when the application in the equipment may determine that the order of the SIM card expires or the SIM card is out of the serviceable coverage and cannot provide the network service normally, the application in the user equipment may start the BLE service, and does not send Bluetooth heartbeat data to the SIM card. In this case, the SIM card determines that the heartbeat expires, the Bluetooth connection is disconnected, and P-SIM profile data is automatically deleted. After deleting the P-SIM profile successfully, the SIM card is automatically switched back to the initial STK SIM card mode, profile data of the seed card is re-enabled, and a SIM card mode notification is actively sent to the OTA platform.

After receiving the SIM card mode notification triggered by switching of the working mode of the SIM card, the OTA platform forwards the notification to the cloud card platform. The cloud card platform receives the notification to determine that no cloud card profile data exists on the SIM card. The SIM card mode notification carries a SIM card identity, a profile reclaiming scenario identifier (00: initial mode, 01: out of service coverage, 02: code number expired) of the SIM card, and network camping location information (a PLMN, a LAC, and a Cell) of the seed card. The cloud card platform may determine, based on the SIM card identity, the scenario identifier, and the current location information, whether a SIM card code number in order allocation information for the multi-function SIM card may be reclaimed. If the order expires, the SIM card code number in the order allocation information may be reclaimed, an allocation status of the SIM card code number is updated, and a code number delivery status of the order is updated. If the current location is not within the serviceable coverage, but the order does not expire, a reclamation operation may be not performed, and only the code number delivery status is updated. The card allocation request is triggered again after a location of the user equipment changes, and the cloud card platform on the server may deliver a same SIM card code number.

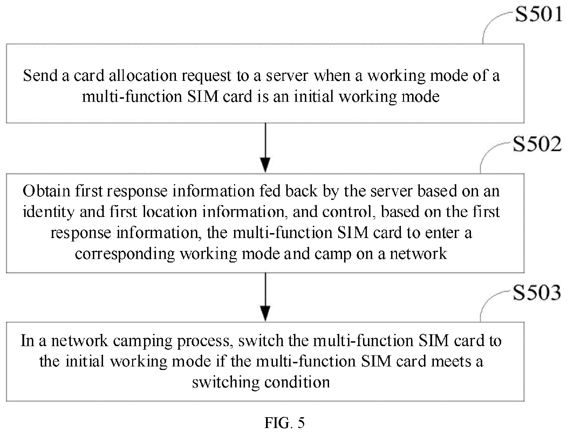

Correspondingly, referring to FIG. 5, this application further provides an allocation method for a multi-function SIM card, applied to user equipment. The allocation method for a multi-function SIM card may specifically include the following step S501 to step S503.

Step S501: Send a card allocation request to a server when a working mode of the multi-function SIM card is an initial working mode.

The card allocation request may carry an identity and first location information of the SIM card inserted into the user equipment.

Step S502: Obtain first response information fed back by the server based on an identity and first location information, and control, based on the first response information, the multi-function SIM card to enter a corresponding working mode and camp on a network.

The first response information may include first type information of a target type and a SIM card code number of the target type, and the target type is determined by the server from a plurality of SIM card types based on the identity and the first location information. The user equipment may control, based on the first type information, the multi-function SIM card to enter a target working mode that is in a plurality of working modes and that corresponds to the target type, to camp on the network based on the SIM card code number and a communication channel corresponding to the target working mode.

In some implementations of this application, if the target type is a physical SIM card, the user equipment may control the multi-function SIM card to enter a BLE SIM card mode, and a communication channel corresponding to the BLE SIM card mode is a Bluetooth channel. Further, the user equipment may write the SIM card code number into the multi-function SIM card through the Bluetooth channel, to use the SIM card code number in the multi-function SIM card to camp on the network.

If the target type is an eSIM card, the user equipment may control the multi-function SIM card to enter an eSIM card mode, and a communication channel corresponding to the eSIM card mode is any one of an OMA channel, a Bluetooth channel, or a system channel. Further, the user equipment may write the SIM card code number into the multi-function SIM card through any one of the OMA channel, the Bluetooth channel, or the system channel, to use the SIM card code number in the multi-function SIM card to camp on the network.

If the target type is a soft SIM card, the user equipment may control the multi-function SIM card to enter an STK SIM card mode or a BLE SIM card mode, and a communication channel corresponding to the STK SIM card mode is an SMS message channel or a BIP channel. Further, the user equipment may write the SIM card code number into the multi-function SIM card through any one of the SMS message channel, the BIP channel, or the Bluetooth channel, so that the user equipment uses the SIM card code number in the multi-function SIM card to camp on the network.

Step S503: In a network camping process, switch the multi-function SIM card to the initial working mode if the multi-function SIM card meets a switching condition.

In some implementations of this application, when the SIM card inserted into the user equipment meets the switching condition, the multi-function SIM card may be switched to the initial working mode, and a seed card is enabled to camp on the network.

Specifically, when powered on for the first time, the multi-function SIM card is in the initial working mode set when the multi-function SIM card is delivered from a factory. The seed card is enabled to camp on the network, and a SIM card mode notification is reported.

When an order bound to the multi-function SIM card exceeds a validity period, the user equipment may determine that the multi-function SIM card meets the switching condition, the multi-function SIM card is switched to the initial working mode, the seed card configured in the multi-function SIM card is enabled to camp on the network, and the SIM card mode notification is reported.

When the multi-function SIM card is out of a serviceable coverage and cannot provide a network, the user equipment may determine that the multi-function SIM card meets the switching condition, the multi-function SIM card is switched to the initial working mode, the seed card configured in the multi-function SIM card is enabled to camp on the network, and the SIM card mode notification is reported. The serviceable coverage is a service coverage of a SIM card code number currently used by the multi-function SIM card inserted into the user equipment.

It may be understood that for the network camping process of the user equipment, refer to the descriptions in FIG. 1 to FIG. 4. Details are not described in this application.

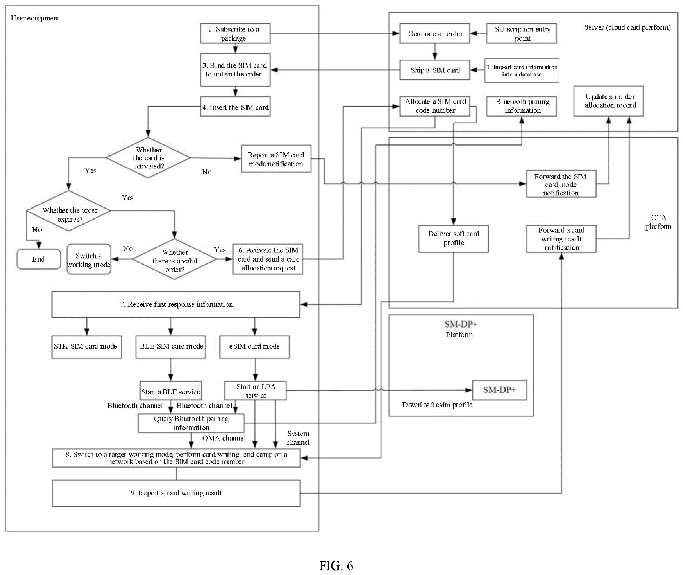

For ease of understanding, referring to FIG. 6, FIG. 6 is a schematic flowchart of an implementation of network camping of user equipment by using a card allocation system according to this application.

First, card information of a multi-function SIM card may be imported into a data center of a cloud card platform. A user may subscribe to a SIM card package through an application or another entry point. After receiving an order, the cloud card platform selects the multi-function SIM card for shipment, and generates a binding relationship between an identity of the SIM card and the order. After receiving the multi-function SIM card, the user may bind the identity of the SIM card by using the application in the equipment to manage the SIM card for renewal and recharging. After inserting the card at a destination, the user opens the application in the equipment to query the package currently subscribed to in the bound SIM card. If a destination package is not activated, the user may choose to activate the SIM card, and send a card allocation request to the cloud card platform on a server. After the user equipment receives first response information of the cloud card platform, the application in the user equipment may select, based on a type and a system permission of an operating system of the equipment, a matched communication channel to deliver an instruction to the card, to instruct the SIM card to switch to a target working mode corresponding to a target type for matching. After successfully downloading profile data of a SIM card code number, the application in the user equipment selects a matched communication channel to write the data of the SIM card code number into the multi-function SIM card. After card writing succeeds, the SIM card code number may be enabled to camp on the network, and a card writing result is generated and reported.

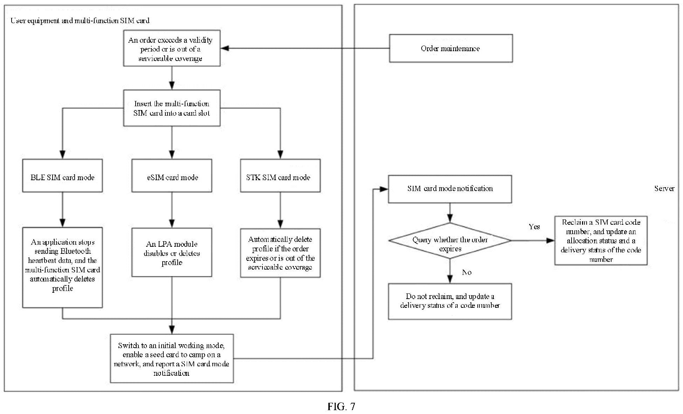

Referring to FIG. 7, when the order of the multi-function SIM card exceeds a validity period or is out of a serviceable coverage, the user equipment may determine a working mode of the multi-function SIM card. If a current working mode is an STK SIM card mode, the application does not need to perform processing. The multi-function SIM card automatically determines to automatically delete the SIM card code number if a currently enabled SIM card code number exceeds the validity period, re-enables a seed card, and actively reports a SIM card mode notification. If the current working mode is an eSIM card mode, the application in the equipment may deliver, by using an LPA module, an instruction to instruct an eSIM card to disable or delete eSIM profile. Specifically, if the order of the multi-function SIM card exceeds the validity period, the LPA module delivers an instruction to instruct the eSIM card to delete the eSIM profile; or if the multi-function SIM card is out of the serviceable coverage, the LPA module delivers an instruction to instruct the eSIM card to disable the eSIM profile. In this way, when the multi-function SIM card returns to the serviceable coverage, the eSIM profile may be used again. After deleting or disabling the eSIM profile successfully, the card restores factory settings and automatically switches back to the STK SIM card mode, the seed card is re-enabled to camp on a network, and the SIM card mode notification is actively reported. The LPA also notifies an SM-DP+ platform of a local operation result of the eSIM profile. If the current working mode is a BLE SIM card mode, a BLE Service may be enabled, and Bluetooth heartbeat data is not sent. When determining that a Bluetooth heartbeat expires, the SIM card automatically deletes P-SIM profile data. After deleting the P-SIM profile data successfully, the card restores factory settings and automatically switches back to the STK SIM card mode, the seed card is re-enabled to camp on the network, and the SIM card mode notification is actively reported.

The cloud card platform receives the SIM card mode notification reported by the card to determine that there is no profile of the SIM card code number on the card. It may be determined, based on whether an order corresponding to the SIM card identity expires, whether to reclaim the code number. In addition, a code number delivery status in order allocation information is updated.

In the implementations of this application, the card allocation request is sent to the server when the working mode of the multi-function SIM card is the initial working mode, the first response information fed back by the server based on the identity and the first location information is obtained, and the multi-function SIM card is controlled, based on the first response information, to enter the corresponding working mode and camp on the network. In this way, a SIM card may be controlled, based on a use scenario of the SIM card, to enter working modes corresponding to code numbers of different SIM card types (for example, a physical SIM card, an eSIM card, and a soft SIM card). In addition, in the network camping process, the multi-function SIM card is switched to the initial working mode if the multi-function SIM card meets the switching condition, so that use of different types of SIM cards can be implemented by a single SIM card, which improves scenario adaptability of the SIM card, improves a service capability of a SIM card service provider, and optimizes operation costs.

It should be noted that, for brief description, the foregoing method embodiments are described as a series of action combinations. However, a person skilled in the art should understand that this application is not limited to the described action sequence, because according to this application, some steps may be performed in another sequence.

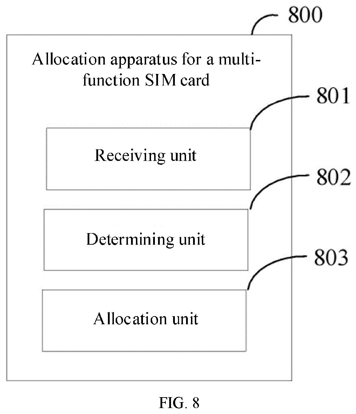

FIG. 8 is a schematic diagram of a structure of an allocation apparatus 800 for a multi-function SIM card according to an embodiment of this application. The allocation apparatus 800 for a multi-function SIM card is disposed on a server.

Specifically, the allocation apparatus 800 for a multi-function SIM card may include:
a receiving unit 801, configured to receive a card allocation request sent by user equipment, where the card allocation request carries an identity and first location information of a multi-function SIM card configured in the user equipment, and the multi-function SIM card is configured with a plurality of working modes that are in a one-to-one correspondence with a plurality of SIM card types;
a determining unit 802, configured to determine a target type from the plurality of SIM card types based on the identity and the first location information; and
an allocation unit 803, configured to send first response information to the user equipment, where the first response information includes first type information of the target type and a SIM card code number of the target type, and the first type information is used to enable the multi-function SIM card to enter a target working mode that is in the plurality of working modes and that corresponds to the target type, so that the user equipment completes writing of the SIM card code number based on a communication channel corresponding to the target working mode, and camps on a network.

In some implementations of this application, the determining unit 802 may be specifically configured to query, based on the identity and the first location information, information about an order bound to the multi-function SIM card; determine candidate types available for allocation from the plurality of SIM card types based on the information about the order; and determine the target type from the candidate types.

In some implementations of this application, the determining unit 802 may be specifically configured to determine traffic costs for the user equipment to use a SIM card code number of each candidate type to camp on the network; and determine the target type from the candidate types based on the traffic costs.

In some implementations of this application, the SIM card code number of the target type is a local SIM card code number associated with the first location information in SIM card code numbers of the target type.

In some implementations of this application, the allocation apparatus 800 for a multi-function SIM card further includes an updating unit, configured to receive a SIM card mode notification reported when the multi-function SIM card meets a switching condition, where the SIM card mode notification carries a scenario identifier and location information; and update a delivery status and a reclaiming status of the SIM card code number based on the scenario identifier and the location information.

In some implementations of this application, the updating unit may be further configured to receive a card writing result notification reported after successful card writing of data of the SIM card code number, where the card writing result notification carries a SIM card identity and a target SIM card code number; and update an order activation status, activation time and expiration time, a delivery status of the SIM card code number, and the like based on the card writing result notification.

It should be noted that for convenience and brevity of description, for a specific working process of the allocation apparatus 800 for a multi-function SIM card, refer to a corresponding process of the method in FIG. 4. Details are not described herein again.

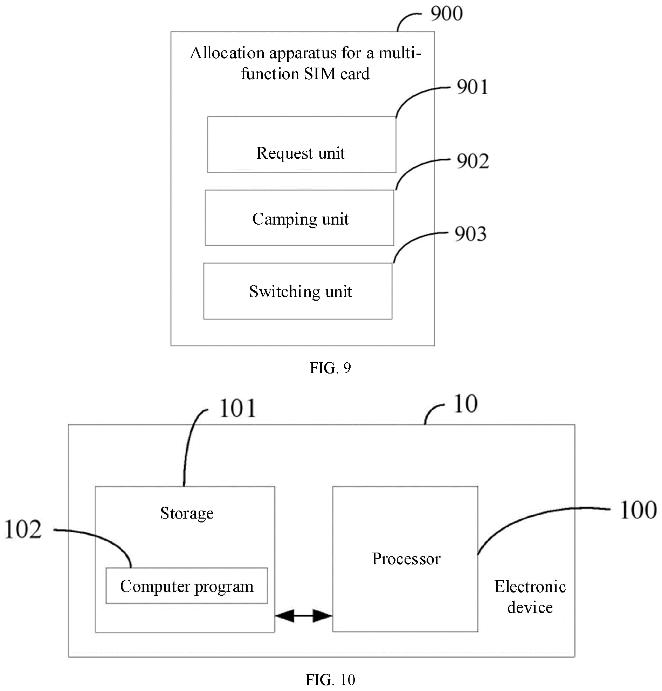

FIG. 9 is a schematic diagram of a structure of an allocation apparatus 900 for a multi-function SIM card according to an embodiment of this application. The allocation apparatus 900 for a multi-function SIM card is disposed on user equipment.

Specifically, the allocation apparatus 900 for a multi-function SIM card may include:
a request unit 901, configured to send a card allocation request to a server when a working mode of the multi-function SIM card is an initial working mode, where the card allocation request carries an identity and first location information of the multi-function SIM card, and the initial working mode is an STK SIM card mode;
a camping unit 902, configured to obtain first response information fed back by the server based on the identity and the first location information, and control, based on the first response information, the multi-function SIM card to enter a corresponding working mode and camp on a network; and
a switching unit 903, configured to: in a network camping process, switch the multi-function SIM card to the initial working mode if the multi-function SIM card meets a switching condition.

In some implementations of this application, the camping unit 902 may be configured to obtain the first response information, where the first response information includes first type information of a target type and a SIM card code number of the target type, and the target type is determined by the server from a plurality of SIM card types based on the identity and the first location information; control, based on the first type information, the multi-function SIM card to enter a target working mode that is in a plurality of working modes and that corresponds to the target type, to complete writing of the SIM card code number based on a communication channel corresponding to the target working mode and camp on a network.

In some implementations of this application, the camping unit 902 may be further configured to: if the target type is a physical SIM card, control the multi-function SIM card to enter a BLE SIM card mode, where a communication channel corresponding to the BLE SIM card mode is a Bluetooth channel; and writing the SIM card code number into the multi-function SIM card through the Bluetooth channel, so that the user equipment uses the SIM card code number in the multi-function SIM card to camp on the network; if the target type is an eSIM card, control the multi-function SIM card to enter an eSIM card mode, where a communication channel corresponding to the eSIM card mode is any one of an OMA channel, a Bluetooth channel, or a system channel; and writing the SIM card code number into the multi-function SIM card through any one of the OMA channel, the Bluetooth channel, or the system channel, so that the user equipment uses the SIM card code number in the multi-function SIM card to camp on the network; or if the target type is a soft SIM card, control the multi-function SIM card to enter an STK SIM card mode or a BLE SIM card mode, where a communication channel corresponding to the STK SIM card mode is an SMS message channel or a BIP channel; and writing the SIM card code number into the multi-function SIM card through any one of the SMS message channel, the BIP channel, or a Bluetooth channel, so that the user equipment uses the SIM card code number in the multi-function SIM card to camp on the network.

In some implementations of this application, the switching unit 903 may be further configured to: when an order bound to the multi-function SIM card exceeds a validity period, determine that the multi-function SIM card meets the switching condition, switch the multi-function SIM card to the initial working mode, and enable a seed card configured in the multi-function SIM card to camp on the network; and/or when the multi-function SIM card is out of a serviceable coverage, determine that the multi-function SIM card meets the switching condition, switch the multi-function SIM card to the initial working mode, and enable the seed card configured in the multi-function SIM card to camp on the network.

It should be noted that for convenience and brevity of description, for a specific working process of the allocation apparatus 900 for a multi-function SIM card, refer to a corresponding process of the method in FIG. 5. Details are not described herein again.

FIG. 10 is a schematic diagram of an electronic device according to an embodiment of this application. Specifically, the electronic device 10 may include a processor 100, a storage 101, and a computer program 102 that is stored in the storage 101 and that is capable of running on the processor 100, such as an allocation program or a camping program of a SIM card. When executing the computer program 102, the processor 100 implements the steps in the foregoing embodiments of the allocation method for a multi-function SIM card, for example, step S401 to step S403 shown in FIG. 4. Alternatively, when executing the computer program 102, the processor 100 implements the steps in the foregoing embodiments of the allocation method for a multi-function SIM card, for example, step S501 to step S503 shown in FIG. 5.

Alternatively, when executing the computer program 102, the processor 100 implements functions of the modules/units in the foregoing apparatus embodiments, for example, functions of the receiving unit 801, the determining unit 802, and the allocation unit 803 shown in FIG. 8, or for example, functions of the request unit 901, the camping unit 902, and the switching unit 903 shown in FIG. 9.

The computer program may be divided into one or more modules/units, and the one or more modules/units are stored in the storage 101 and executed by the processor 100 to complete this application. The one or more modules/units may be a series of computer program instruction segments capable of performing a specific function, and the instruction segment is used to describe an execution process of the computer program in the electronic device.

For example, the computer program may be divided into a receiving unit, a determining unit, and an allocation unit. A specific function of each unit is as follows: The receiving unit is configured to receive a card allocation request sent by user equipment, where the card allocation request carries an identity and first location information of the multi-function SIM card configured in the user equipment, and the multi-function SIM card is configured with a plurality of working modes that are in a one-to-one correspondence with a plurality of SIM card types. The determining unit is configured to determine a target type from the plurality of SIM card types based on the identity and the first location information. The allocation unit is configured to send first response information to the user equipment, where the first response information includes first type information of the target type and a SIM card code number of the target type, and the first type information is used to enable the multi-function SIM card to enter a target working mode that is in the plurality of working modes and that corresponds to the target type, so that the user equipment completes writing of the SIM card code number based on a communication channel corresponding to the target working mode and camps on a network.

For another example, the computer program may be divided into a request unit, a camping unit, and a switching unit. A specific function of each unit is as follows: The request unit is configured to send the card allocation request to a server when a working mode of the multi-function SIM card is an initial working mode, where the card allocation request carries the identity and the first location information of the multi-function SIM card, and the initial working mode is an STK SIM card mode. The camping unit is configured to obtain the first response information fed back by the server based on the identity and the first location information, and control, based on the first response information, the multi-function SIM card to enter a corresponding working mode and camp on a network. The switching unit is configured to: in a network camping process, switch the multi-function SIM card to the initial working mode if the multi-function SIM card meets a switching condition.

The electronic device may include but is not limited to the processor 100 and the storage 101. A person skilled in the art may understand that FIG. 10 is merely an example of the electronic device, and does not constitute a limitation on the electronic device. The electronic device may include more or fewer components than those shown in the figure, or may combine some components or different components, for example, may further include an input/output device, a network access device, a bus, and the like.

The processor 100 may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array or another programmable logic device, a discrete gate or a transistor logic device, a discrete hardware component, or the like. The general-purpose processor may be a microprocessor, or the processor may be any conventional processor or the like.

The storage 101 may be an internal storage unit of the electronic device, for example, a hard disk or a memory of the electronic device. The storage 101 may alternatively be an external storage device of the electronic device, for example, a plug-in hard disk, a smart media card (Smart Media Card, SMC), a secure digital (Secure Digital, SD) card, or a flash card (Flash Card) that is configured on the electronic device. Further, the storage 101 may alternatively include both an internal storage unit and an external storage device of the electronic device. The storage 101 is configured to store the computer program and other programs and data required by the electronic device. The storage 101 may further be configured to temporarily store data that has been output or that is to be output.

It should be noted that for convenience and brevity of description, for a structure of the foregoing electronic device, refer to a specific description of the structure in the method embodiments. Details are not described herein again.

A person skilled in the art may clearly understand that, for ease and brevity of description, division of the foregoing functional units and modules is merely used as an example for description. In an actual application, the foregoing functions may be allocated to different functional units and modules based on a requirement, that is, an internal structure of the apparatus is divided into different functional units or modules, to complete all or some of the functions described above. The functional units or modules in the embodiments may be integrated into one processing unit, each unit may exist alone physically, or two or more units are integrated into one unit. The foregoing integrated unit may be implemented in a form of hardware, or may be implemented in a form of a software functional unit. In addition, specific names of the functional units and modules are also used for ease of mutual distinction, and are not used to limit the protection scope of this application. For a specific working process of each of the units and the modules in the foregoing system, refer to a corresponding process in the foregoing method embodiments. Details are not described herein again.

In the foregoing embodiments, the descriptions of the embodiments have respective focuses. For a part that is not detailed or described in an embodiment, refer to related descriptions in other embodiments.

A person of ordinary skill in the art may be aware that the units and the algorithm steps in the examples described with reference to the embodiments disclosed in this specification can be implemented by using electronic hardware or a combination of computer software and electronic hardware. Whether these functions are performed by hardware or software depends on specific applications and design constraints of the technical solutions. A person skilled in the art can implement the described functions through different methods for each specific application, but such implementation should not be considered to be beyond the scope of this application.

In the embodiments provided in this application, it should be understood that the disclosed apparatus/electronic device and method may be implemented in another manner. For example, the described apparatus/electronic device embodiment is merely an example. For example, division of the modules or units is merely division of logical functions. In an actual implementation, there may be another division manner. For example, a plurality of units or components can be combined or integrated into another system, or some features can be ignored or not executed. In addition, the displayed or discussed mutual coupling, direct coupling, or communication connection may be implemented through some interfaces, and indirect coupling or a communication connection of the apparatuses or units may be in an electrical, mechanical, or another form.

The units described as separate components may or may not be physically separated, and components displayed as units may or may not be physical units, in other words, may be located in one place, or may be distributed on a plurality of network units. Some or all of the units may be selected based on actual requirements to achieve the objectives of the solutions in the embodiments.

In addition, the functional units in the embodiments of this application may be integrated into one processing unit, each of the units may exist alone physically, or two or more units may be integrated into one unit. The foregoing integrated unit may be implemented in a form of hardware, or may be implemented in a form of a software functional unit.

When the integrated module/unit is implemented in a form of a software functional unit and sold or used as an independent product, the integrated module/unit may be stored in a computer-readable storage medium. Based on this understanding, all or some of the processes in the methods of the foregoing embodiments may be implemented by a computer program instructing relevant hardware in this application. The computer program may be stored in a computer-readable storage medium. When the computer program is executed by a processor, the steps in the foregoing method embodiments may be implemented. The computer program includes computer program code, and the computer program code may be in a source code form, an object code form, an executable file, some intermediate forms, or the like. The computer-readable medium may include any entity or apparatus capable of carrying computer program code, a recording medium, a USB flash drive, a removable hard disk, a magnetic disk, an optical disc, a computer storage, a read-only memory (Read-Only Memory, ROM), a random access memory (Random Access Memory, RAM), an electrical carrier signal, a telecommunications signal, a software distribution medium, and the like. It should be noted that content included in the computer-readable medium may be appropriately increased or decreased based on a requirement of legislation and patent practice in a jurisdiction, for example, in some jurisdictions, based on the legislation and patent practice, the computer-readable medium does not include an electrical carrier signal and a telecommunications signal.

The foregoing embodiments are merely used to describe the technical solutions of this application, instead of limiting the technical solutions of this application. Although this application is described in detail with reference to the foregoing embodiments, a person of ordinary skill in the art should understand that the technical solutions described in the foregoing embodiments may still be modified, or some of the technical features may be replaced by equivalents. However, these modifications or replacements do not make the essence of the corresponding technical solutions depart from the spirit and scope of the technical solutions in the embodiments of this application, and shall fall within the protection scope of this application.

## Claims

1. An allocation method for a multi-function SIM card, **characterized by** being applied to user equipment, wherein the multi-function SIM card is configured in the user equipment, and the multi-function SIM card is configured with a plurality of working modes that are in a one-to-one correspondence with a plurality of SIM card types; and
the allocation method for a multi-function SIM card comprises:
sending a card allocation request to a server when a working mode of the multi-function SIM card is an initial working mode, wherein the card allocation request carries an identity and first location information of the multi-function SIM card, and the initial working mode is an STK SIM card mode;
obtaining first response information fed back by the server based on the identity and the first location information, wherein the first response information comprises first type information of a target type and a SIM card code number of the target type;
controlling, based on the first type information, the multi-function SIM card to enter a target working mode that is in the plurality of working modes and that corresponds to the target type, to complete writing of the SIM card code number based on a communication channel corresponding to the target working mode, and use the SIM card code number in the multi-function SIM card to camp on a network; and
in a network camping process, switching the multi-function SIM card to the initial working mode if the multi-function SIM card meets a switching condition.

2. The allocation method for a multi-function SIM card according to claim 1, **characterized in that** the target type is determined by the server from the plurality of SIM card types based on the identity and the first location information.

3. The allocation method for a multi-function SIM card according to claim 2, **characterized in that** the plurality of working modes comprise a BLE SIM card mode, an eSIM card mode, and an STK SIM card mode, and the plurality of SIM card types comprise at least a physical SIM card, an eSIM card, and a soft SIM card; and
the controlling, based on the first type information, the multi-function SIM card to enter a target working mode that is in the plurality of working modes and that corresponds to the target type, to complete writing of the SIM card code number based on a communication channel corresponding to the target working mode, and camp on a network comprises:
if the target type is the physical SIM card, controlling the multi-function SIM card to enter the BLE SIM card mode, wherein a communication channel corresponding to the BLE SIM card mode is a Bluetooth channel; and writing the SIM card code number into the multi-function SIM card through the Bluetooth channel, so that the user equipment uses the SIM card code number in the multi-function SIM card to camp on the network;
if the target type is the eSIM card, controlling the multi-function SIM card to enter the eSIM card mode, wherein a communication channel corresponding to the eSIM card mode is any one of an OMA channel, a Bluetooth channel, or a system channel; and writing the SIM card code number into the multi-function SIM card through any one of the OMA channel, the Bluetooth channel, or the system channel, so that the user equipment uses the SIM card code number in the multi-function SIM card to camp on the network; or
if the target type is the soft SIM card, controlling the multi-function SIM card to enter the STK SIM card mode or the BLE SIM card mode, wherein a communication channel corresponding to the STK SIM card mode is an SMS message channel or a BIP channel; and writing the SIM card code number into the multi-function SIM card through any one of the SMS message channel, the BIP channel, or a Bluetooth channel, so that the user equipment uses the SIM card code number in the multi-function SIM card to camp on the network.

4. The allocation method for a multi-function SIM card according to any one of claims 1-3, **characterized in that** the switching the multi-function SIM card to the initial working mode if the multi-function SIM card meets a switching condition comprises:
when an order bound to the multi-function SIM card exceeds a validity period, determining that the multi-function SIM card meets the switching condition, switching the multi-function SIM card to the initial working mode, and enabling a seed card configured in the multi-function SIM card to camp on the network; and/or
when the multi-function SIM card is out of a serviceable coverage, determining that the multi-function SIM card meets the switching condition, switching the multi-function SIM card to the initial working mode, and enabling the seed card configured in the multi-function SIM card to camp on the network.

5. An allocation method for a multi-function SIM card, **characterized by** being applied to a server, wherein the allocation method for a multi-function SIM card comprises:
receiving a card allocation request sent by user equipment, wherein the card allocation request carries an identity and first location information of a multi-function SIM card configured in the user equipment, and the multi-function SIM card is configured with a plurality of working modes that are in a one-to-one correspondence with a plurality of SIM card types;
determining a target type from the plurality of SIM card types based on the identity and the first location information; and
sending first response information to the user equipment, wherein the first response information comprises first type information of the target type and a SIM card code number of the target type, and the first type information is used to enable the multi-function SIM card to enter a target working mode that is in the plurality of working modes and that corresponds to the target type, so that the user equipment completes writing of the SIM card code number based on a communication channel corresponding to the target working mode, and uses the SIM card code number in the multi-function SIM card to camp on a network.

6. The allocation method for a multi-function SIM card according to claim 5, **characterized in that** the determining a target type from the plurality of SIM card types based on the identity and the first location information comprises:
querying, based on the identity and the first location information, information about an order bound to the multi-function SIM card;
determining candidate types available for allocation from the plurality of SIM card types based on the information about the order; and
determining the target type from the candidate types.

7. The allocation method for a multi-function SIM card according to claim 6, **characterized in that** the determining the target type from the candidate types comprises:
determining traffic costs for the user equipment to use a SIM card code number of each candidate type to camp on the network; and
determining the target type from the candidate types based on the traffic costs.

8. The allocation method for a multi-function SIM card according to any one of claims 5-7, **characterized in that** a SIM card code number of the target type is a local SIM card code number associated with the first location information in SIM card code numbers of the target type.

9. The allocation method for a multi-function SIM card according to any one of claims 5-7, **characterized in that** the plurality of working modes comprise a BLE SIM card mode, an eSIM card mode, and an STK SIM card mode, and the plurality of SIM card types comprise at least a physical SIM card, an eSIM card, and a soft SIM card;
if the target type is the physical SIM card, the first type information is used to enable the multi-function SIM card to enter the BLE SIM card mode, and a communication channel corresponding to the BLE SIM card mode is a Bluetooth channel, so that the user equipment writes the SIM card code number into the multi-function SIM card based on the Bluetooth channel, and uses the SIM card code number in the multi-function SIM card to camp on the network;
if the target type is the eSIM card, the first type information is used to enable the multi-function SIM card to enter the eSIM card mode, and a communication channel corresponding to the eSIM card mode is any one of an OMA channel, a Bluetooth channel, or a system channel, so that the user equipment writes the SIM card code number into the multi-function SIM card based on any one of the OMA channel, the Bluetooth channel, or the system channel, and uses the SIM card code number in the multi-function SIM card to camp on the network; or
if the target type is the soft SIM card, the first type information is used to enable the multi-function SIM card to enter the STK SIM card mode or the BLE SIM card mode, a communication channel corresponding to the STK SIM card mode is an SMS message channel or a BIP channel, and a communication channel corresponding to the BLE SIM card mode is a Bluetooth channel, so that the user equipment writes the SIM card code number into the multi-function SIM card based on any one of the SMS message channel, the BIP channel, or the Bluetooth channel, and uses the SIM card code number in the multi-function SIM card to camp on the network.

10. A card allocation system, **characterized by** comprising a server and user equipment, wherein a multi-function SIM card is configured in the user equipment, and the multi-function SIM card is configured with a plurality of working modes that are in a one-to-one correspondence with a plurality of SIM card types;
the user equipment is configured to perform the steps of the allocation method for a multi-function SIM card according to any one of claims 1-4; and
the server is configured to perform the steps of the allocation method for a multi-function SIM card according to any one of claims 5-9.

11. An electronic device, comprising a storage, a processor, and a computer program that is stored in the storage and that is capable of running on the processor, **characterized in that** the steps of the allocation method for a multi-function SIM card according to any one of claims 1-4 are implemented when the processor executes the computer program or the steps of the allocation method for a multi-function SIM card according to any one of claims 5-9 are implemented when the processor executes the computer program.
